Europäisches Patentamt

European Patent Office

Office européen des brevets

(11) Publication number: **0 139 529**
A2

# (12) EUROPEAN PATENT APPLICATION

(21) Application number: **84307184.6**

(22) Date of filing: **18.10.84**

(51) Int. Cl.⁴: **B 65 D 8/04**
**B 27 H 3/02, B 27 M 3/00**

(30) Priority: **19.10.83 GB 8327938**
**13.04.84 GB 8409647**

(43) Date of publication of application:
**02.05.85 Bulletin 85/18**

(84) Designated Contracting States:
**AT BE CH DE FR GB IT LI LU NL SE**

(71) Applicant: **George, William Rodney**
**The Pavilion Thames Road**
**Goring on Thames Oxfordshire RG6 9AL(GB)**

(72) Inventor: **George, William Rodney**
**The Pavilion Thames Road**
**Goring on Thames Oxfordshire RG6 9AL(GB)**

(74) Representative: **Crawford, Andrew Birkby et al,**
**A.A. THORNTON & CO. Northumberland House 303-306**
**High Holborn**
**London WC1V 7LE(GB)**

(54) **Container.**

(57) A wooden container (10) is supplied to the user in flat pack kit form. The kit comprises a number of wooden container wall sections (12), one or more laminated wooden rings (11) and a wooden container base (21). On assembly the container wall sections (12) are fixed to the laminated rings (11) so that a container wall is built up, the rings (11) extending round the outer periphery of the wall. The base (21) is fixed either frictionally at the bottom of the container, or supported on dowels extending outwards from the inner surface of the wall sections at the bottom of the container (10). The wall sections (12) are arranged to engage with each other by tongue and groove (13,14) joints provided in their adjacent edges, the joints being suitably dimensioned to allow for expansion and contraction of the wall sections (12).

A method and apparatus for manufacturing individual wall sections is also disclosed.

FIG.1.

EP 0 139 529 A2

- 1 -

Container

This invention relates to a kit having a plurality of components which can be fitted together by a user to form a container and to the container thus provided.

This invention also relates to apparatus for manufacturing individual components of the container.

It is known to provide a kit for a container comprising a plurality of walls or panels each provided on the inner surface with means to engage each other and to engage the base of the container and further comprising one or more bands which act as a peripheral binding and which can either be tightened or fixedly secured around or to the walls.

It is also known to provide containers for containing plants such as trees and shrubs, or for containing goods which require ventilation, in both these types of containers holes are required to be drilled in the appropriate places.

The above known containers have a number of disadvantages. One of the disadvantages is the expense of producing a container especially if it is made from hard wood. If on the other hand the container is produced from soft wood which is relatively inexpensive, the main disadvantage is that the wood tends to deform.

From one aspect, the present invention provides an open topped container comprising a base and a generally upstanding wall defining an enclosure, wherein the wall comprises a plurality of interengaging wall sections each comprising a plurality of upstanding members which are fixed together, and at least one band extending around the outside of the wall characterised in that the band is endless and at least a plurality of the wall sections are arcuate in cross-section.

From another aspect, the present invention also provides a kit for constructing an open topped container having a base and a generally upstanding wall defining an enclosure, the kit comprising a plurality of separate wall sections which are interengagable with each other, each wall section comprising a plurality of members which are fixed together, and at least one wall section being of arcuate lateral cross-section, a base section, and at least one endless band, said wall sections, base section and endless band being of such dimensions that the kit can be provided in a generally flat pack.

Preferably a plurality of such continuous bands are used which generally define the minimum nominal cross-sectional dimensions of the container. The wall sections are each fixed to the relatively rigid band or bands and expand or contract relative to the bands depending on environmental conditions.

This type of construction is in direct contrast with conventional barrel manufacture, where metal straps which define the maximum cross-sectional dimensions are shrunk on to dry wooden staves in order to compress the dry wooden staves to form a water-tight construction. Swelling of the wooden staves due to absorption of moisture is largely restricted by the metal straps to further enhance the water-tight properties.

Preferably, the base of the container is so designed that holes are provided between the base and the walls of the container when the container is finally assembled.

Each of the wall sections of the container comprises a plurality of upstanding members or staves which are fixed together. The staves are preferably fixed together by interengaging means, and are r.f. welded or glued. Further, adjacent sides of the wall sections are advantageously provided with interengaging means to allow relative lateral movement between the wall sections whereby to allow for expansion of the wall sections.

In order to produce a complete container it is necessary that each individual wall section be so shaped as to conform with the shape of the complete wall of the finished container. For instance, if the container is to be generally circular in cross-section, each wall section will need to be correspondingly arcuate in cross-section, or if the container is to be generally square with rounded corners, then some of the wall sections will need to be generally linear in cross-section, whilst those at the corners will need to be arcuate in cross-section.

Also, in order to produce each wall section from the individual members, the individual members must be forced into engagement with each other and fixed together.

In order to facilitate production of the individual wall sections, the present invention further provides a tool for forming wall sections for an open topped container comprising a base and a generally upstanding wall defining an enclosure, said tool comprising a chamber having a back wall, two side walls, an open top end and a bottom end, the two side walls tapering in towards each other from the top end to the bottom end of the chamber, wherein said chamber is arranged to receive therein a number of individual members which comprise at least one wall section, wherein engagement means are provided in each side wall, said engagement means being arranged to engage with corresponding means in corresponding edges of two of the members for each wall section, and wherein said back wall is shaped to conform to the outer contours of the desired complete wall section, whereby the individual members can be received at the top end of the chamber and forced into an engaged relationship conforming to the shape of the chamber by being pushed towards the bottom end of the chamber, whereby facilitating fixing of the individual members to each other to form at least one complete wall section.

According to a further aspect the present invention provides a method for forming wall sections for an open topped container comprising a base and a generally upstanding wall defining an enclosure, said method comprising the steps of assembling a first wall section from a plurality of interengaging individual members, said individual members being shaped such that the desired shape of the wall section is produced when said members are correctly interengaged with each other, placing said wall section in a chamber having two side walls which taper towards each other and a back wall, which together comprise a chamber of a predetermined shape, moving said wall section in a direction parallel with the direction of the taper to cause the wall section to be compressed within the chamber, and clamping the wall section within the chamber to facilitate bonding of the individual staves to each other to form a number of complete wall sections.

In order to facilitate the production of a container in which the container walls flare outwards at an angle from the bottom of the container to the top, it is preferred that each individual member be tapered in width in a direction from the top of the wall to the bottom.

The container of the present invention can be made in a plurality of shapes and sizes, as long as at least a portion of the wall of the container is arcuate in cross-section, but for simplicity the present invention will now be described using an embodiment thereof as an example only with reference to the accompanying drawings, wherein:-

Figure 1 shows a perspective view of an embodiment of an assembled container according to the present invention;

Figure 2 shows a base of the container shown in Figure 1;

Figure 3 shows an exploded perspective view of an interengaging arrangement as shown in Figure 1;

Figure 4 shows a cross-sectional front view of apparatus which can be used in manufacturing wall sections for the container;

Figure 5 shows a plan view of the apparatus shown in Figure 4;

Figure 6 shows a cross-sectional front view of an embodiment of a tool for use in manufacturing wall sections for the container; and

Figure 7 shows a plan view of the tool shown in Figure 6.

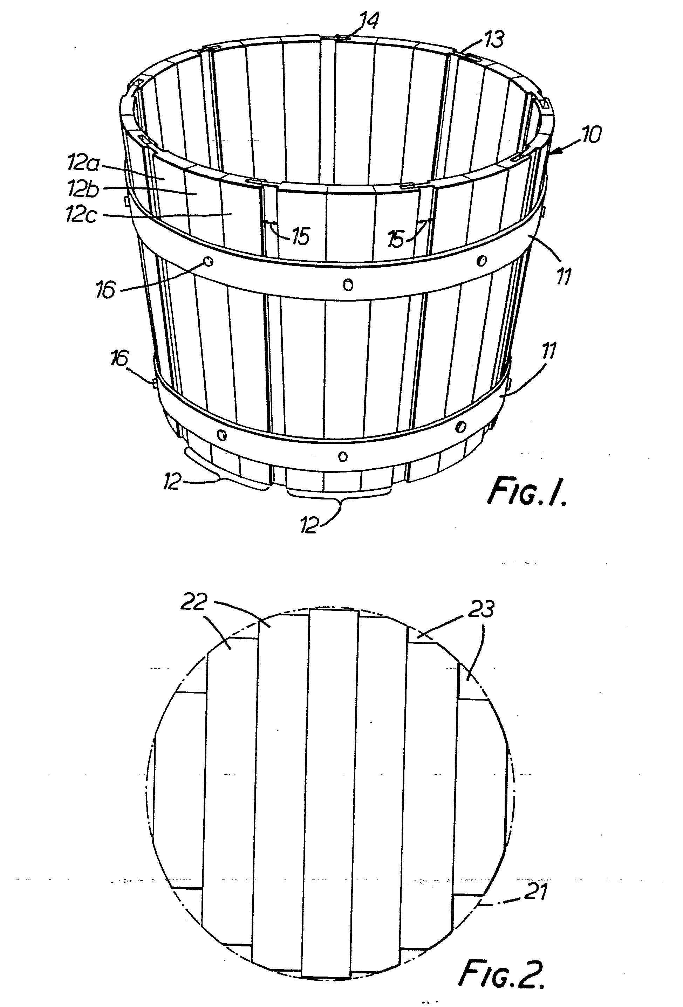

Figure 1 shows an assembled container 10 which is made up from a plurality of wall sections which in this case are eight in number, two continuous bands 11 and a base 21 which are supplied to the consumer in a flat pack kit.

Each wall section 12 is itself made up of two or more staves joined together by interengaging means such as a tongue and groove arrangement which is then r.f.

welded or glued. Preferably there are two or three staves 12a, 12b and 12c in each wall section 12 which provide a curved wall section yet which will provide a relatively flat pack when the container is in a collapsed state; it has been found that for a stave 30-40 mm wide, three is the optimum number.

Each wall section 12 can be either linear or curved depending on the final shape of the container, and there can be any number of wall sections depending on the desired size of the container. In the embodiment shown in Figure 1 the curvatures of the wall sections 12 are substantially identical in order to provide a circular cross-section so that the order of assembly of the wall sections 12 with respect to each other is unimportant.

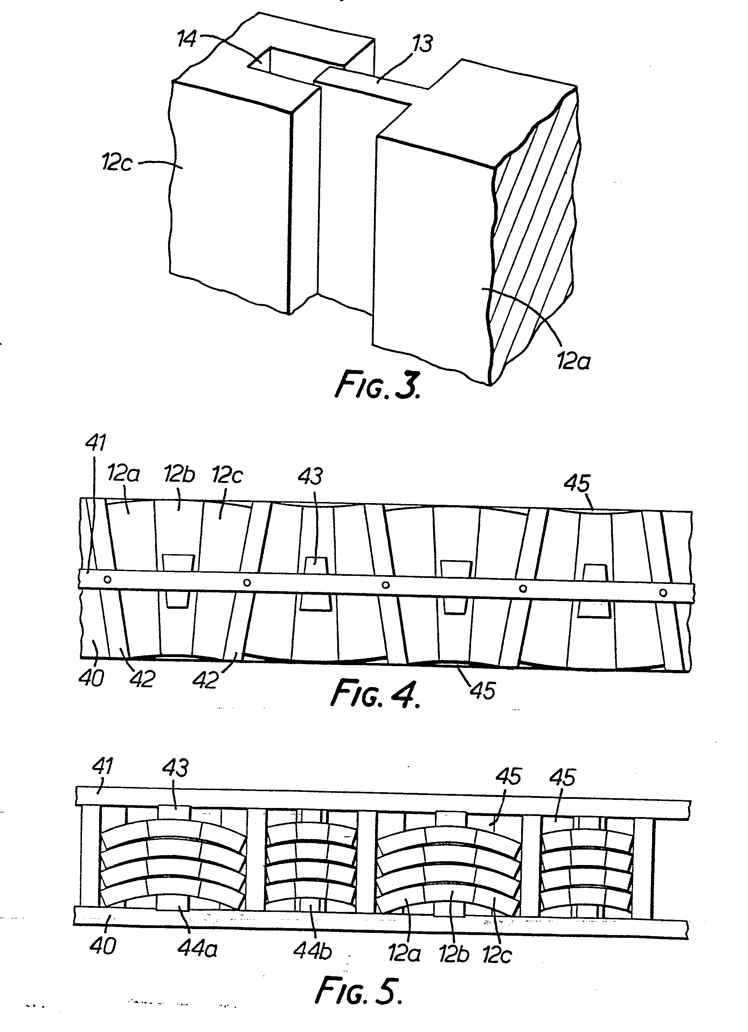

Each wall section is preferably provided with interengaging means such as a tongue 13 and groove 14 as shown in Figure 3. The tongue 13 may be from 3 to 5 mm in length and is arranged on one side of the wall section 12, and the co-operating groove 14 of approximately the same depth is arranged laterally opposite the tongue 13 on the other side of the wall section 12.

On assembly of the container, each wall section 12 is fixed to the or each continuous band 11 by means of corresponding fixing locations 16 provided at intervals around each continuous band 11 and provided in the face of each wall section 12. The container is built up in this way by the user so that the wall sections 12 are held relative to each other by being fixed on to the or each continuous band 11.

The wall sections 12 are preferably fixed to the continuous bands 11 by the user in a predetermined order. If, for example, the container wall consists of eight wall sections 12 it is preferable to first fix only four of the wall sections 12 to the continuous bands 11, leaving gaps between the first four wall sections 12 for receiving the other four wall sections 12. The other four wall sections 12 can then be located in the gaps between the first four wall sections 12 and then fixed to the bands 11. This method facilitates ease of construction of the container by the user, especially where the wall sections 12 have already undergone expansion due to moisture absorbtion prior to construction of the container. If the container were to be constructed by fixing wall sections 12 to the continuous bands 11 one at a time, each wall section 12 being fixed adjacent a previous wall section 12, the gap left for receiving the final wall section 12 is liable to be so narrow as to result in difficulty in locating the final wall section 12.

The base 21 shown in Figure 2 can be slidingly placed in position through the top of the container 10. The base is made up from a number of rectangular strips 22 at least some of which are of different lengths and shaped as indicated by the dotted line in Figure 2 to produce a periphery which is substantially circular but which might be formed to provide a number of gaps 23 when the base 21 is placed in position in the container 10 for the drainage of water when the container is used for holding plants.

The dimensions of the base 21 can be made such that when it is slidingly placed in position through the top of the container 10, it is frictionally secured at the bottom of the container by contact at points around the inner wall of the container. However, it is also envisaged that means may be provided at the bottom of the container 10 for locating dowels in a number of the wall sections 12. The dowels would be fixed in the wall sections 12 so that they extend outwards from convenient points of the inner wall of the container 10, so providing a platform on which the base 21 can be mounted.

The size of the holes or gaps which may be formed between the base and container walls are determined by the size and number of the strips 22. As shown in Figure 2 three pairs of strips of different lengths are arranged about a centre strip in order to form a symmetrical arrangement about the centre strip with the shortest strip being furthest from the centre strip with some of the corners of some of the strips extending beyond a notional boundary of the base 21. The excess length of the strips 22 are trimmed away so as to form the required shape of base. In this example the base is circular. A suitable dimension for the width of each strip is about 44 mm to be used in a container having a base in the order of 460 mm diameter.

The desired shape and size of the container and hence the number of wall sections required to make up the container are predetermined and the or each continuous band 11 is provided with a corresponding number of fixing locations 16 placed equidistant around the circumference of the or each ring 11 so as to correspond with predetermined fixing locations preferably one on each of the centre staves 12b of the wall sections 12. An example of a suitable number of wall sections for an average size shrub container is 9. The wall sections 12 are secured by any suitable method such as a screw nut and bolt or a two piece wedged and barbed rivet to the fixing locations 16 on the or each band 11 by bringing the fixing location on each wall section outward relative to the centre of the container 10 in turn into register with a corresponding fixing location on the band or bands 11.

The interengaging means 13 and 14 provided between adjacent wall sections 12 may interlock so that a continuous container wall is formed. However, this need not necessarily be the case, especially when each

0139529

- 9 -

wall section 12 has very low moisture content.  In that case each wall section may have shrunk so much that the interengaging means 13 and 14 no longer interlock.

The staves 12a, 12b and 12c of the wall sections 12 are advantageously made of soft wood such as pine which is relatively inexpensive and are thus susceptible to expansion due to absorption of moisture.  Maximum expansion occurs across the stave since the grain runs along the length of the staves.  When the wall sections 12 are fixed to each band 11 and expand due to said absorption of moisture, their lateral expansion which at maximum from being machined air dry and to saturation is in the order of 2-3% for pine, and can be as much as 4%, causes the gap 15 between the sides of the wall sections 12 to decrease, whereby the tongue 13 moves laterally deeper into the corresponding groove 14 of the adjacent wall section 12.  The construction of the bands 11 is such as to make them relatively stable in the presence of moisture.

Preferably, the container 10 is designed so that for maximum moisture content, and hence maximum expansion of the staves 12a, 12b and 12c, the gap 15 disappears, and for normal minimum moisture content or in a normal dry condition there is a gap 15 between the sides of the wall sections 12 exposing a portion of the tongue 13, the end of which is in engagement with a corresponding groove 14 in the adjacent side wall 12 so as to maintain the integrity of the wall of the container.

It should be noted regarding the expansion of the wall sections due to moisture content that the container is preferably designed so that at maximum moisture content the gap between adjacent wall sections disappears.  When the wall sections are in a dry condition it may be that the gap between adjacent wall sections is such that the tongue of each wall section does not engage with the corresponding groove. This is not important however, as long as the gap disappears when the wall sections have their maximum water content.

The soft wood staves 12a, 12b, 12c are preferably chemically tested to International standards for soil contact to prevent them from rotting. Container walls formed of the treated soft wood staves have the advantages that they are relatively cheap compared with corresponding hardwood staves, but at the same time they are as resistant to rotting as corresponding hardwood staves because of the chemical treatment.

Each band 11 is preferably made from 3 or 4 ply wooden laminate. For a container about 460 mm high a band of about 50 mm wide can be used where each ply is about 1 mm thick. Preferably a ply of 1.2 mm thick is used; 1.5 mm might render the continuous band 11 too heavy for practical reasons. Each band 11 has sloping sides so that the edge nearest the base has a smaller diameter than the edge nearest the top. Further, the bands 11 are advantageously dimensioned so that the diameter of the upper edge of the lower band is smaller than the diameter of the lower edge of the adjacent band. In this example only two bands are shown. The slope of the sides of the bands 11 is advantageously between 5-10 degrees from the vertical and is preferably about 7 degrees. The continuous bands 11 are substantially non-expandable and can be made from any suitable material such as wood or plastics.

It will be appreciated that the dimensions of the collapsible container are only an example and that alternative dimensions could be used. It will also be appreciated that a generally triangularly shaped, rectangular or square container with rounded corners can be constructed in a similar way. Further the construction of the base in relationship with the side walls could be

0139529

- 11 -

used for providing holes or gaps for ventilation in a container to be used for goods.

The above construction is suitable for all materials which expand in changes in environmental conditions especially woods which behave in a manner similar to soft woods.

Each wall section consists of a number of e.g. 3 staves which are connected together in such a way as to form an integral stave section. In order that the wall sections when assembled provide a uniform container and are easy to assemble, it is necessary to accurately produce each wall section with a relatively accurately defined curve. Figures 4 and 5 show one arrangement of apparatus which will assist in the production of such accurately shaped stave sections.

In the following description, it will be assumed that each stave is connected to its neighbour by means of a tongue and groove joint. Likewise, each wall section is joined to its neighbour by a tongue and groove joint. Further, in order to provide an aesthetically pleasing shape, the wall sections may taper from the top of each section towards the bottom.

The apparatus shown in Figures 4 and 5 utilises a back wall 40 and a plurality of side walls 42 upstanding from the base 40. The side walls 42 are generally perpendicular to the back wall 40, and are angled in towards each other to form at least one tapering chamber 45. Preferably, there are a plurality of chambers 45 adjacent to each other, the side walls 42 being arranged on a single elongate back wall 40 in such a way that each side wall 42 forms a dividing wall for two adjacent chambers 45. The chambers 45 are formed so that adjacent chambers 45 taper in opposite directions.

The sides of each stave 12a, 12b, 12c which make up a wall section 12 are shaped so that when the staves 12a, 12b, 12c are correctly interengaged the correct shape of the wall section 12 is formed. That is, in the case of an arcuate wall section 12, the side of each stave 12a, 12b, 12c would be angled so that when they interengage the correct internal radius of the complete wall section 12 is formed.

A number of staves 12a, 12b, 12c which make up a wall section 12 are interengaged with each other, the shaping of the sides of the staves 12a, 12b, 12c enabling the staves to take up and retain the desired shape of the wall section 12. This wall section 12 is placed with its internal surface, preferably, facing the back wall 40, and a plurality of other wall sections 12 are built up in the same way and stacked one on top of the other on the first wall section, at the same time being moved in a direction parallel with the taper to cause the wall sections to be compressed within the walls 42. The side of the chamber 45 are tapered towards each other so that they abut against the corresponding sides of each wall section 12.

When the chamber 40 is fully loaded with wall sections 12 a clamp 41 which attaches to the ends of the side walls 42 is fixed on to the chamber 45, in order to keep the wall sections 12 in position whilst the individual staves are allowed to bond to each other (the bonding may be by r.f. welding or by glue applied before the staves 12 are loaded into the chamber 45).

In order to make sure that the wall sections 12 retain the correct shape a tapered wedge 43 can be driven between the clamp 41 and the wall section 12 adjacent the clamp.

Also, in order to prevent the wall sections collapsing towards the back wall 40 of the chamber 45, and thus losing their shape, a supporting block or strip 44 can be driven between the back wall 40 of the chamber 45 and the internal surface of the wall section 12 facing the back wall 40.

The block or strip 44 is preferably tapered. When it is the case that arcuate tapered wall sections 12 are being manufactured the block or strip must have larger dimensions at one end 44a than at the other end 44b, in order to correctly support the tapered wall section 12, which will have a larger internal radius at its top than at its bottom.

The clamp is preferably in the form of a straight bar which can be screwed to the ends of the side walls.

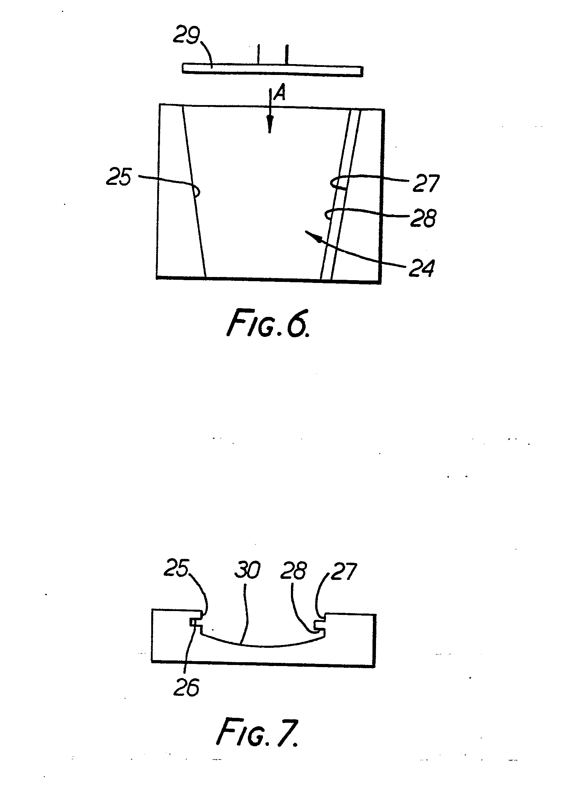

An alternative tool to produce wall sections 12 is shown in Figures 6 and 7. The tool is formed to have a generally tapering chamber 24 one side wall of which 25 is provided with a groove 26 for receiving the tongue of a stave while the opposite side wall 27 is provided with a projection 28 which is arranged to be received in the groove of a stave. The back surface 30 of the chamber 24 is curved with a radius which is identical to the radius of the finally assembled container. The tool is made rigid either by being machined from the solid or else being made of separate pieces which are bolted together.

It should be noted that the back wall of the chamber 24 may be of generally any shape to conform with the desired outer contours of the wall section.

In operation, three staves are slid into the chamber 24 in the direction of the arrow A after having had their interconnecting tongues and grooves, or other interengagement means, coated with a glue or other bonding substance which can be cured either by r.f. welding or by heating. In order to ensure accurate placing of the staves in the chamber 24 a piston member 29 can be butted against the exposed ends of the staves and pressure is applied in the direction of arrow A to force the three staves into the chamber 24. Once the staves are fully in position in the chamber 24 the joints between the staves are cured in some appropriate manner, e.g. by r.f. welding or by heating and then the piston 29 is withdrawn. The stave section can then be removed from the chamber 24 by withdrawing it in a direction opposite to the direction indicated by the arrow A.

It will be appreciated that the jig can contain a number of chambers all directed in the same way as is shown in Figure 6 or it can contain a number of chambers which are alternately directed which requires two piston members one operating in the direction of the arrow A and one operating in the opposite direction.

It will also be appreciated that the side walls of the tool can be provided with a plurality of tongue and groove means, so that manufacture of a plurality of wall sections can take place in one tool chamber. In this case, the back surface 30 of the chamber 24 would abut against one wall section, and the other wall sections contained in the chamber would be stacked on top of each other and would each engage with respective tongue and groove means in the side walls 25, 27. Each wall section formed in this manner would be the same shape.

CLAIMS:

1.      An open topped container (10) comprising a base (21) and a generally upstanding wall defining an enclosure, wherein the wall comprises a plurality of interengaging wall sections (12) each comprising a plurality of upstanding members (12a,12b,12c) which are fixed together, and at least one band (11) extending around the outside of the wall characterised in that the band is endless and at least a plurality of the wall sections are arcuate in cross-section.

2.      An open topped container (10) according to claim 1, wherein said interengaging wall sections (12) comprise tongue (13) and groove (14) joints between adjacent wall sections and which are dimensioned to allow for expansion and contraction of the wall sections.

3.      An open topped container (10) according to any preceding claim wherein said continuous band (11) is of laminated construction.

4.      An open topped container (10) according to any preceding claim wherein said base (21) is shaped to generally conform with the cross-sectional shape of the enclosure, and to engage with the one surface of the wall, but to leave gaps (23) at positions around the edge of the base, between the edge of the base and the inside of the wall.

5.      An open topped container (10) according to any preceding claim wherein each of the wall sections (12) is provided with at least one fixing location (16) and corresponding fixing locations (16) are provided in said at least one continuous band (11), whereby said wall sections are securable to said continuous band.

6.      A kit for constructing an open topped container

(10) having a base (21) and a generally upstanding wall defining an enclosure, the kit comprising a plurality of separate wall sections (12) which are interengageable with each other, each wall section comprising a plurality of members (12a,12b,12c) which are fixed together, and at least one wall section being of arcuate lateral cross-section, a base section (21), and at least one endless band (11), said wall sections, base section and endless band being of such dimensions that the kit can be provided in a generally flat pack.

7.      A kit according to claim 6 wherein there are provided a plurality of said continuous bands (11) of respectively increasing dimensions, the outer dimensions of each respective band being smaller than the inner dimensions of the next largest band, whereby the base section (21) and the bands can fit within each other to facilitate provision of the kit in a flat pack.

8.      A tool for forming wall sections (12) for an open topped container (10) comprising a base (21) and a generally upstanding wall defining an enclosure, said tool comprising a chamber (24) having a back wall (30), two side walls (25,27), an open top end and a bottom end, the two side walls tapering in towards each other from the top end to the bottom end of the chamber, wherein said chamber is arranged to receive therein a number of individual members (12a,12b,12c) which comprise at least one wall section, wherein engagement means (26,28) are provided in each side wall, said engagement means being arranged to engage with corresponding means in corresponding edges of two of the members for each wall section, and wherein said back wall is shaped to conform to the outer contours of the desired complete wall section, whereby the individual members can be received at the top end of the chamber and forced into an engaged relationship, conforming to the shape of the chamber by being pushed towards the bottom end of the chamber, whereby facilitating fixing of the individual members to each other to form at least one complete wall section.

9.      A method for forming wall sections (12) for an open topped container (10) comprising a base (21) and a generally upstanding wall defining an enclosure, said method comprising the steps of assembly a first wall section (12) from a plurality of interengaging individual members (12a,12b,12c), said individual members being shaped such that the desired shape of the wall section is produced when said members are correctly interengaged with each other, placing said wall section in a chamber having two side walls (25,27;42) which taper towards each other and a back wall (30;40), which together comprise a chamber of a predetermined shape, moving said wall section in a direction parallel with the direction of the taper to cause the wall section to be compressed within the chamber, and clamping the wall section within the chamber to facilitate bonding of the individual staves to each other to form a number of complete wall sections.

10.     A method according to claim 9, wherein a plurality of said wall sections (12) are assembled and clamped within said chamber (24;45), the side walls (25,27;42) of said chamber being of suitable length in a direction away from said back wall (30;40) to accommodate said plurality of wall sections.

0139529

1/3

FIG.1.

FIG.2.

14  13

12c

12a

*FIG. 3.*

41
12a  12b  12c  43  45

40  42  42  *FIG. 4.*  45

41  43  45  45

40  44a  44b  12a  12b  12c

*FIG. 5.*

FIG.6.

FIG.7.